# EUROPEAN PATENT APPLICATION

(11) **EP 1 541 651 A1**
(43) Date of publication of application: **15.06.2005**
(21) Application number: 04104864.6
(22) Date of filing: 04.10.2004
(51) Int. Cl.: C09D 179/08, C08G 73/14, D21F 1/30, D21F 1/00

(54) **Polyamide-amic acid coating formulations and processes**

(30) Priority: 19.11.2003 US 716843
(71) Applicant: Voith Fabrics Patent GmbH, 89522 Heidenheim (DE)
(72) Inventor: Patel, Sanjay, Summerville, SC 29485 (US)

(57) **Abstract**

Aqueous formulations comprising polyamide-amic acid (PAA) and molecule linkable to them, processes for using them to coat industrial fabrics and yarns and other articles of manufacture, and the coatings made by such processes, and the coated articles.

## Description

### FIELD OF THE INVENTION

The present invention relates to compositions and processes useful for coating polymeric materials especially those used in industrial fabrics, especially phase separation media and non-woven papermaking machine fabrics.

### BACKGROUND OF THE INVENTION

Many industrial fabrics, including certain papermaking fabrics, must be used at high temperatures. The fabrics are made of synthetic polymers that degrade upon reaction with atmospheric oxygen, and this problem is exacerbated at high temperatures. Similarly the polymers undergo hydrolytic degradation upon contact with water, and this degradation is also accelerated at high temperatures. One approach to these problems is to coat the fabrics with a coating that protects the polymers from oxygen and water. Alternatively, in the case of woven fabrics, the yams used to weave the fabrics may be themselves coated. All this must be accomplished without significantly sacrificing desirable properties of the fabrics, such as tensile and mechanical properties, flexibility, ductility, and toughness.

Papermaking machine fabrics are a particular example of industrial fabrics of interest here. Such fabrics are conveyor belts that move chemically treated wood pulp through various processes used to produce a finished paper product. In the later stages, dryer or through-air-dryer (TAD) fabrics are exposed to high temperatures to eliminate water from the paper product. Typical dryer fabrics hold the web in contact with a rotating heated cylinder whereas TAD fabrics support the web while hot air is blown through the web and fabric for drying. TAD machines and fabrics are particularly useful for making tissue paper. An increase in a fabric's heat resistance translates into increased fabric life, increased machine output, and associated savings in paper production costs.

There are numerous methods of coating materials that involve the use of volatile organic solvents but these VOC's are harmful to the environment. Therefore a desirable goal is to coat fabrics, or even their component yams, in a manner that eliminates or minimizes pollution of the environment by such VOC's. One possible means for decreasing pollution is to use water instead of organic solvents during the fabric or yam finishing processes.

U.S. patent 6,479,581 discloses that water-soluble polyamide-amic acid (PAA), with reversibly neutralized carboxyl groups is a polymer that can be used as a starting material to provide polyamide-imide (PAI) coatings for certain types of materials. The present invention recognizes the value of such polymers for coating industrial fabrics, especially papermaking fabrics. It also recognizes that the PAA carboxyl groups, when no longer neutralized, provide a window of opportunity for either directly linking or crosslinking a PAA polymer to another molecule or, in controlled fashion, to converting a desired fraction of its amide-amic acid moieties to amide-imide moieties. The window must be utilized before either the carboxyl groups cross-link to undesired targets or an excessive number of those groups convert their amide-am ic acid moieties to amide-imide moieties. Linking PAA to other types of molecules allows enhancement of various properties, many useful for industrial fabrics.

### BRIEF SUMMARY OF THE INVENTION

### Coating compositions

Coating compositions of the invention are those comprising:
(1) a polyamide-amic acid (PAA), said PAA comprising amide-amic acid units each comprising a carboxyl group;
(2) a neutralizing agent capable of neutralizing a carboxyl group;
(3) a directly linkable molecule, said molecule being one that is linkable to a carboxyl group; and
(4) water.

The neutralizing agent is present in sufficient quantity to make said PAA soluble in water. It is preferred that all of the amide-amic acid units are a neutralized. The identity of the directly linkable molecule will depend on the particular properties that are desired for objects coated by the composition.

In a particular set of embodiments, the directly linkable molecule is a cross-linker such that one molecule of the directly linkable molecule can form covalent links to two other molecules and both such links can exist at the same time. One of such links is intended to be a carboxyl group of the PAA molecule. However, the composition is flexible as to the nature and purpose of the second link. The second of such links can be intended to link to either a second PAA molecule, to a crosslinkable molecule other than PAA, or a second molecule of crosslinker. Consistent with such intention the composition would then further comprise a second PAA molecule, a crosslinkable molecule other than a PAA molecule, or a second molecule of crosslinker. In the latter case, a cross-linker dimer would form and that itself could act as a crosslinker.

The identity of the cross-linkable molecule will depend on the particular coating properties desired. However, the directly linkable molecule/crosslinker itself may be chosen to impart certain properties to the coating composition.

The coating compositions are applied to fabrics and other articles of manufacture, after which the coatings are subjected to conditions that allow the desired linkages to occur.

It is frequently advantageous to have the composition further comprise a wetting agent, a swelling agent, a surface active agent, coalescing agent, defoaming agent and/or a condensation agent.

### Nomenclature

The abbreviation, PAA, as used here applies to any molecule that has at least two amide-amic acid groups linked to each other. The term, PAI, as used here applies to any molecule that has at least two amide-imide units. It is possible for a molecule to qualify both as a PAA and a PAI.

### Coating processes

Related inventions are processes in which an article is coated by composition ofthe invention. In a preferred embodiment of such a process, the composition is applied to the surface of the article, and the resulting coated article is subjected to a temperature sufficient to volatilize the neutralizing agents. The coated article is then heated sufficiently long to allow the carboxyl groups to link to directly linkable molecules and, if a directly linkable molecule is to be used as a crosslinker, to also allow the crosslinker to link to a crosslinkable molecule. Finally, the article is heated at a further elevated temperature to allow imidization/cyclization ofamide-amic acid units to amide-imide units and, if desired, end-to-end polymerization of PAA and/or PAI units.

At least 5 % of the amide amic units in the coating composition PAA be linked to other molecules by the time the coating process is finished and the coating itself completed.

Typically the surface to be coated will comprise a polymer. Examples of such polymers include, but are not limited to polyesters, copolyesters such as PCTA, polyamides, polphenylsulfides, and elastomers such as polyurethanes. The thickness of the coating will depend on the application, substrate, and coating formulation. The thickness of the coating will be less than that which introduces undesirable properties, such as brittleness and inadequate porosity.

### Coatings and articles comprising them

In another aspect, the invention is a coating comprising a PAI covalently linked (directly or indirectly via a crosslinker) to at least one molecule other than a PAA or a PAI. Preferably such a coating of the invention is prepared from a coating composition of the invention. In a related aspect, the invention is an article of manufacture that comprises a coating of the invention. The article can, for example, be an industrial fabric or a yam. Of particular interest are papermaking machine fabrics, which are normally more easily coated than their respective yams.

### DETAILED DESCRIPTION OF THE INVENTION

### Polyamide amic acids and Polyamide-imides

Consistent with U.S. patent 6,479,581, polyamide-amic acids (PAA's) used in the compositions ofthe invention are polymers in which the main repeated unit is an amide-amic acid unit of formula **Ia** or **Ib,** where **Ia** is 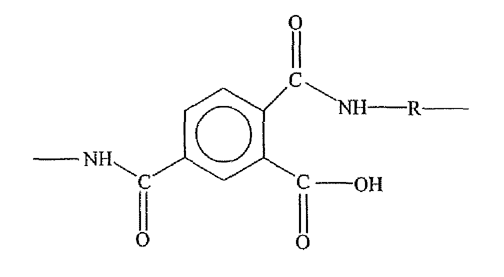 and where **Ib** is

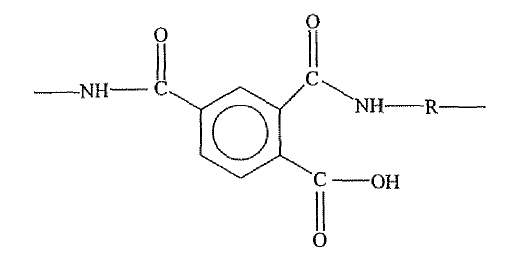

In compounds of formula **Ia** and **Ib**, R is preferably a substituted or unsubstituted divalent arylene moiety, that moiety being selected from the group consisting of formulas **IIa, IIb,** and **IIc** where **IIa** is 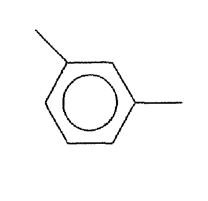 where **IIb** is 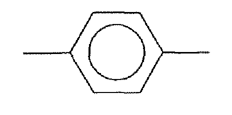 and where **IIc** is 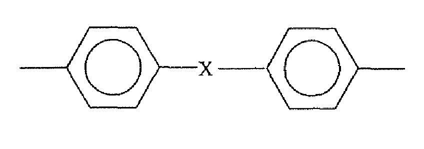 where X is preferably either a direct chemical bond or a divalent radical. Such a divalent radical is preferably selected from the group consisting of -S-, -SO₂-, -O-, -CO-, and -C(CH₃)₂-.

Moieties of formula **Ia** or **Ib** can convert to their corresponding amide-imide unit as a result of the carboxyl group of those compounds reacting with the neighboring am ide group. This can occur when a composition of the invention is converted to a coating by using the process of the invention. The resulting amide-imide unit will have a structure of formula **III** as follows 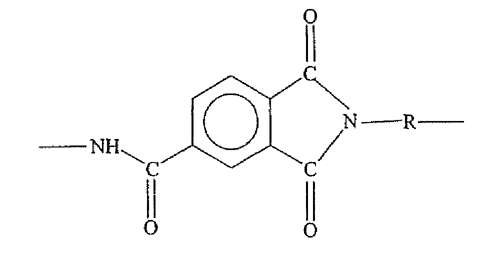 Coating compositions preparations preferably utilize PAA wherever the ratio of the amide-amic acid to amide-imide units is at least 8:1.

The preferred PAA for use in the present invention comprise primarily amid-amic acid units of formula **IVa** or **IVb** where **IVa** is 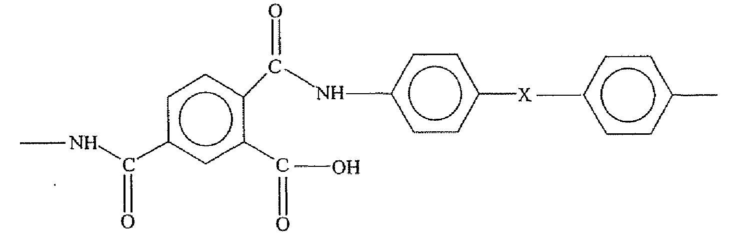 and where **IVb** is 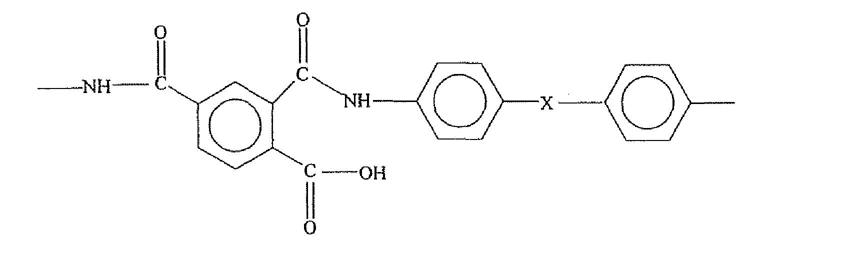 and its corresponding amide-imide unit is one of formula V as follows

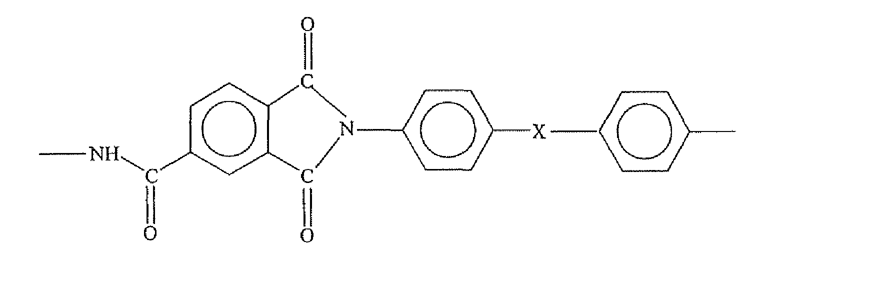

The preparation of various PAA's and PAI's is described in U.S. patent 6,479,581.

Commercially available PAA's useful for the present inventions are Torlon AI-30 and Torlon AI-50 sold by Solvay Advanced Polymers. The properties of coatings made from them include reasonable flexibility, thermal stability, chemical stability and oxidative stability. They also include exceptional strength at high temperatures, and excellent resistance to creep and wear. Their acid number is reported as being 125 mg KOH/g. Cast solutions made from them can be cured up to 250-300 °C for maximum performance ifthere is no adverse effect on the article they coat.

### Neutralizing agents

Examples of neutralizing agents include, but are not limited to, neutralizing agents such as a secondary or tertiary amine, especially di-(C₁-C₄ alkyl) amines, ammonia, metal bases, metal carbonates, metal bicarbonates, and other quatemizing molecules. It is preferred that all of the carboxyl groups are neutralized, so as to achieve solubility in water. Accordingly, the molar ratio of neutralizing agent to carboxyl group is preferably at least 1.0, and most preferably is 1.25. It is also preferred that the neutralizing agent is volatizable (i.e, reversibly neutralizes the carboxyl groups) and most preferably readily volatilizes in the temperature range 120 to 140 °C, so as to free the carboxyl groups to enter into reactions.

### Molecules that can be directly linked to the polyamide amic acid

PAA is preferably synthesized by the reaction of a trimellitic acid halide and an aromatic diamine (U.S. patent 6,479,581). The synthesis will result in a carboxyl group being present on all amic acid units in the PAA. Additionally, however, the end units will have a carboxyl group and/or an amino group, the ratio of the two depending on the molar ratio of the starting materials and other factors. In the case of AI-50, for example, the ratio is more in favor of carboxyl groups. Upon removal of the neutralizing agents, the additional end unit carboxyl groups will be available to react, in a condensation reaction, with PAA molecules that have am ino groups on their end amic acid unit, thereby forming oligomers that result in better film properties.

Directly linkable molecules, other than PAA, are directly linked to the PAA carboxyl groups in order to impart or improve particular properties to the coating. As a result, they cannot undergo direct linkage until after the neutralizing agents are volatilized, an event that occurs after the composition has been applied as a coating. The directly linkable molecule can be any molecule that is water soluble or dispersable and that undergoes a condensation reaction with the carboxyl group. The list of chemical groups that can react with the carboxyl group include, but are not limited to, epoxy, amino (amide), hydroxyl, isocyanate, oxazoline, and other carboxyl groups. The lists of possible directly linkable and cross linkable polymers include, but are not limited to, functionalized polysiloxanes, functionalized siloxanes, polyamine-imines, amines, polyoxazolines, oxazolines, and functionalized polyurethanes.

Polysiloxanes (and siloxanes) can add the following properties to a PAI-based coating: improved water repellency, improved dirt repellency, better paper release properties, increased toughness, and increased durability, without a loss in resistance to high temperatures. Examples are:
Silquest® Wetlink™ 78 Silane (γ-glycidoxypropylmethyldiethoxysilane);
CoatOSil® 1770 Silane (β-(3,4-epoxycyclohexyl)ethyltriethoxysilane); and
Silquest® A-187 Silane (γ-glycidoxypropyltrimethoxysilane); all available from GE/OSI.

Polyamines (and amines) add the following properties: increased surface energy, better adhesion to substrates, and improved resistance to abrasion. Examples are: Amine-modified siloxanes (available from GE/OSI); Lupazols (polyamine-imines available from BASF Chemicals); and imidazolidinone compounds (available from Mitsui Chemicals America, Inc. and other sources).

Polyoxazolines (and oxazolines) add the following properties: improved adhesion to substrates, increased coating durability, and improved resistance to abrasion. Examples include waterborne polymers with oxazoline groups (e.g., Epocros compounds available from NA Industries, Inc.)

Polyurethanes add the following properties: enhanced abrasion resistance, increased toughness, enhanced adhesion and improved film-forming properties. Aliphatic polyurethanes are preferred for purposes of increasing hydrophobicity and inhibiting yellowing. Increasing the number of hydroxyl or carboxyl moieties in the polyurethane increases the number of sites available for linking. Polyurethanes suitable for the present inventions are Solulol 1091 and Solulol 1023 sold by Solulol Chemicals Corp. and BGB Stockhausen polyurethanes such as 10-95-1.

Crosslinking PAA to other PAA molecules is generally undesirable as it decreases the flexibility, ductility, and toughness of the coated fabric or yarn.

### Crosslinkers

If a molecule is to function as a cross-linker, it must have at least two reactive groups, a non-limiting list of examples of such groups being epoxy, hydroxyl, carboxyl, isocyanate, oxazoline, siloxane, and amine groups. The composition may comprise more than one type of linkable molecule and/or more than one type of crosslinkable molecule.

Cross-linkers include, but are not limited to, oxazolines, blocked isocyanates (e.g., Grilbond® EMS IL-6), functionalized polyurethanes, and waterborne polycarbodiimides (e.g., Carbodilite Waterborne V-series, available from GSI Exim America). The following is a non-limiting list of specific examples of useful crosslinkers:
Silquest® A-1120 Silane (N-β-(aminoethyl)-gamma-aminopropyltrimethoxysilane);
Silquest® A-1100 Silane, (γ-aminopropyltriethoxysilane), which is a preferred crosslinker;
Silquest® A-1637 Silane, (4-amino-3,3-dimethylbutyltrimethoxysilane); and
Silquest® Wetlink™ 78 Silane; CoatOSil® 1770; and CoatOSil® 2810, a diepoxy siloxane.

### Swelling, wetting, coalescing, priming and antifoaming agents

Although it is possible to create coatings of this invention without these types of agents, they can each contribute to a superior product. Usually, at least a swelling agent, a coalescing agent and a priming agent will be used. All five types of agents are well-known in the art, but are briefly discussed here.

Swelling agents are those that have the ability to penetrate a polyester or other polymer. The agents open up the surface being coated to provide better anchoring of the coat. One example is DAC-999 (available from BGB Stockhausen Inc.), which is suitable for polyesters and polyamides, as well as certain other polymers.

Wetting agents are surfactants that improve the ability of water to adhere to the substrate by lowering the surface energy of the coating medium to less than that of the substrate.

Coalescing agents are those that allow particles in a film to flow together to form a continuous film. In the present case, these agents are useful to improve coalescence of PAA and other particles after the water in the coating solution has evaporated. An example is N-methyl-2-pyrrolidone (NMP).

Priming agents, also known as surface-modifying or anchoring agents, are those that improve the ability of the coating polymers to adhere to the substrate. They generally have many polar groups. In the case of polyester substrates, useful priming agents include water-based polyester dispersions. Examples of priming agents are Vilanol dispersions from Toyobo, water-based high-molecular weight dispersions from Takamatsu Oil and Fat Company, and Eastman Chemical's AQ-29 water-based polyester dispersions.

Anti-foaming agents (defoaming agents) reduce the amount of foam during processing, An example is DruPlus L418, available from Ashland Chemical.

### Surface energy reduction

The surface of energy of the coating can be reduced by adding an agent that results in such reduction. The agent does not have to be covalently linked to the PAA, PAI or any directly linkable molecule. Indeed, it can be added in particulate form, especially using small particles (major dimension less than 1 micron). Fluorine-containing agents are preferred. A particularly preferred agent is polytetrafluoroethylene (PTFE). Other preferred agents include THV dispersions from 3M Corporation.

### Papermaking fabrics

Papermaking fabrics of primary interest as coating substrates for the present invention are TAD fabrics, dryer fabrics and those press fabrics that are used under conditions, such as in an impulse press process and fabrics that are used in processes that renders them susceptible to wad burn. Such fabrics can be used not only to make paper but also to make nonwoven products.

TAD fabrics, also called impression or structured fabrics, are of particular interest and are particularly well-suited to TAD machines that make tissue paper. Such TAD machines replace the press section normally used on papermaking machines with a TAD section, for example comprising at least one TAD drum. TAD fabrics not only support the web during drying, but are used to impart a 3-dimensional structure or texture to the web as a result of the topography of the fabric. However, the combination of high temperatures and moisture that the TAD fabrics are exposed to places a premium on increasing their resistance to heat.

### Temperature control

In a typical process, a coating composition of the invention is applied to the fabric or other substrate and then subjected to steps that successively accomplish drying, volatilization of the neutralizing agent, cross-linking within the composition, condensation and/or imidization of PAA units. Frequently, the coating composition can be directed at one side of the fabric during the application step but yet achieve the desirable result that both sides are coated. A typical sequence of temperature steps would be 120 °C for drying, 140 °C for volatilization/deneutralization, and 160 °C or higher for condensation, imidization and crosslinking.

The following examples are intended to illustrate the invention, not to limit it.

### EXAMPLES

### Example 1

### Comparison of using various coating compositions to coat a drawdown card

Six coating formulations were tested:

### Formulation 1:

35 g of AI-50 ( as a 10% AI-50 solution in water) neutralized with dimethylethanolamine (DMEA; 1.25 M of DMEA per 1.0 M of AI-50 carboxyl groups, reacted at 80 °C for 1 hour);
0.5 g NMP; and
1.3 g Silquest® Wetlink™ 78 Silane (results in modification of 50% of the AI-50 carboxyl groups).

### Formulation 2:

35 g of AI-50 (as a 10% AI-50 solution in water) neutralized with DMEA;
0.5 g NMP; and
0.65 g Silquest® Wetlink™ 78 Silane, (results in modification of 25% of the AI-50 carboxyl groups).

### Formulation 3:

35 g of AI-50 (as a 10% AI-50 solution in water) neutralized with DMEA;
0.5 g NMP;
1.3 g Silquest® Wetlink™ 78 Silane; and
0.2 g AI-50, fine powder, < 50 µm.

### Formulation 4:

35 g of AI-50 (as a 10% AI-50 solution in water) neutralized with DMEA;
0.5 g NMP;
1.61g Silquest® Wetlink™ 78 Silane; and
1.89 Solulol 1023, a polyurethane.

### Formulation 5:

35 g of AI-50 (as a 10% AI-50 solution in water) neutralized with DMEA;
1.0 g NMP;
2.25 g CoatOSil® 1770 (as a 25% solution in L7608, a surfactant available from GE/OSi Silicones).

### Formulation 6:

35 g of AI-50 (as a 10% AI-50 solution in water) neutralized with DMEA;
1 g NMP;
1.62g Silquest® Wetlink™ 78 Silane (as a 75% solution in L7608), and
2.106 g 10-95-1 (a polyurethane from BGB Stockhausen).

For all formulations, the volume was reduced to 15 - 25% solids by evaporation of the water at 100-120 °C. A Sample-Ease® drawdown card (Sample -Ease, Minneapolis, MN 55401 was coated by a draw-down technique to 4 - 8 mil (thousands of an inch) thickness. The coated film was air-dried overnight and then incubated successively at 110 °C for about 1 hour, 140 °C for about 15 minutes; and for about 15-30 minutes as follows:
Formulations 1 through 4: 220- 225 °C.
Formulations 5 and 6: 190 °C.

### The results were as follows:

Formulations 1, 2 and 4 through 6: A continuous, clear, smooth, coating without breaks, and showing good adhesion to the substrate, was formed.

Formulation 3: The film had a matted appearance rather than a smooth appearance, and was opaque, but otherwise was a good coating.

A formulation of AI-50 alone, coated according to the above procedure, produced a brittle, scaly coating, too brittle to be considered a film. Addition of NMP or dimethylacetamide (DMAC) resulted in a similar coating.

### Example 2

### Coating of a papermaking fabric

A woven polyester dryer fabric measuring 72.1 meters x 1.5 meters was coated. The coating formulation was made as follows:
272.5 g/liter of AI-50 ( as a 10 % solution in water) neutralized as in Example 1;
1 g/liter of antifoaming agent, DruPlus L418 from Ashland Chemical;
5.88 g/liter of CoatOSil 1770;
10 g/liter of NMP;
5 g/liter of DAC999;
2 g/liter of Alkanol 6112; and
735 g/liter of water.

The coating formulation was applied using a lick-up trough, until the fabric was saturated; i.e., its surface was completely coated but did not drip. The coated fabric was air-dried at 120 °C until it was dry to the touch. It was then heated at 140 °C for about 10 minutes to deneutralize the PAA and subsequently exposed to two cycles of heating at 160 °C for about 10 minutes each. Finally it was heated at 160-190 °C for about 10 to 15 minutes.

The process resulted in a very good coating. A second coating was applied to the now coated fabric by the same procedure as used for the first coating, except this time the final heating step was done at 200 °C rather than 160-190 °C. The coating was less than optimal as it was somewhat brittle, probably due to being excessively thick, but otherwise it had good coat properties.

### Example 3

### Coating of a papermaking fabric using a priming step

A priming step and a coating step were applied to a large woven polyester dryer fabric (72.1 meters x 1.53 meters).

### The priming formulation:

109/liter DAC-999;
40 g/liter Vylonal 1985 , a copolyester resin priming agent from Toyobo Co., Ltd.;
2 g/liter DruPlus 4386, an antifoaming agent;
0.75 g/liter IL-6; and
943.25 g/liter of water.

The priming solution was applied by using a lickup trough technique and the fabric was heated successively at 120 °C, 140 °C, and 160 °C for 30, 10, and 10 minutes respectively. It was then heated at 180 °C for 10 minutes.

### The coating formulation:

250 g/liter AI -50 (as a 12 % solution in water);
10 g/liter of MNP;
2 g/liter of Alkanol 6112;
2 g/liter of 4386;
10.69 g/liter of Silquest® Wetlink™ 78 Silane; and
725.3 g/liter of water.

The coated fabric was heated successively at 120, 140 and 180 °C for 30, 10, and 10 minutes respectively. The result was a coating with a very good appearance. Furthermore, the coated fabric tested well when run in a 6 hour pilot run in a through-air drying stage of a papermaking process using one through-air dryer with no problems. After the run, both the top side and the underside of the fabric showed a coating with a clear, unbroken, good appearance. An uncoated polyester fabric exposed to similar conditions experiences severe degradation.

### Example 4

### Coating of a nylon papermaking press fabric

Three samples of a nylon press fabric (nylon 66 base, mixture of nylon 6 and nylon 66 batt fibers), 1300 g/square meter, were coated, each with a different coating solution. No priming was needed as PAI adheres well to nylon. The 3 coating formulations consisted of:
(1) 6% PAI-50 neutralized, 50% solids;
(2) 3% PAI-50 neutralized, 50% solids; and
(3) water.

A wetting agent (Alkanol 6112) was added to all 3 formulations at a final concentration of about 1 g/liter of formulation.

Each coated fabric was exposed to 120 °C for 5 to 10 minutes; to 140 °C for 5-10 minutes; and 188 °C for 15 minutes. The fabric were then tested in a bolt test using a one-half inch bolt rotating at 2500 rpm under 200 psi. Fabrics coated with either coating formulations 1 or 2 showed a 50 % improvement in the time needed to cause fabric bum.

## Claims

1. A coating composition, said composition comprising:
(1) a polyamide-amic acid (PAA), said PAA comprising amide-amic acid units each comprising a carboxyl group;
(2) a neutralizing agent capable of neutralizing a carboxyl group;
(3) a directly linkable molecule, said molecule being one that is linkable to a carboxyl group; and
(4) water.

2. A coating composition of Claim 1 wherein the directly linkable molecule is a cross-linker, such that one molecule of the directly linkable molecule can form covalent links to two other molecules and both such links can exist at the same time.

3. A coating composition of Claims I or 2 wherein the directly linkable molecule is a PAA.

4. A coating composition of Claims 1 or 2 wherein the directly linkable molecule is selected from the group consisting of a functionalized siloxane, a functionalized polysiloxane, an amine, a polyamine-imine, an oxazoline, a polyoxazoline, and a functionalized polyurethane.

5. A coating composition of Claims 1 or 2 wherein the directly linkable molecule comprises a moiety selected from the group consisting of an epoxy, amino, hydroxyl, isocyanate, oxazoline, and a carboxyl moiety.

6. A composition of Claims 1 or 2 wherein said neutralizing agent is selected from the group consisting of secondary amines, tertiary amines, ammonia, a metal base, a metal carbonate, and a quaternary molecule.

7. A composition of Claims 1 or 2 wherein said neutralizing agent reversibly neutralizes the carboxyl groups on the PAA molecule.

8. A coating composition of Claims 1 or 2 wherein said composition further comprises an agent selected from the group consisting of a swelling agent, a wetting agent, a coalescing agent, a priming agent and an antifoaming agent.

9. A coating composition of Claims 1 or 2 wherein said composition further comprises an a swelling agent, a coalescing agent, and a priming agent.

10. A coating composition of Claims 1 or 2 wherein said composition further comprises a swelling agent, a wetting agent, a coalescing agent, a priming agent and an antifoaming agent.

11. A coating composition of Claims 1 or 2 wherein said composition further comprises an agent that reduces the surface energy of a coating.

12. A coating composition of claims 1 or 2 wherein said composition further comprises a compound comprising fluorine.

13. A coating composition of Claims 1 or 2 wherein said composition further comprises PTFE.

14. A coating composition of Claim 2, wherein one of the two other molecules is another molecule of the cross-linker.

15. A coating composition of Claim 2, wherein the composition further comprises a cross-linkable molecule, said cross-linkable molecule linkable to the cross-linker.

16. A coating composition of Claim 15, wherein the cross-linkable molecule is selected from the group consisting of a functionalized siloxane, a functionalized polysiloxane, an amine, a polyamine-imine, an oxazoline, a polyoxazoline, and a functionalized polyurethane.

17. A coating composition of Claim 15 wherein the cross-linkable molecule comprises a moiety selected from the group consisting of an epoxy, amino, hydroxyl, isocyanate, oxazoline, and a carboxyl moiety.

18. A coating comprising a PAI linked at least to one molecule other than a PAA or a PAI.

19. A coating of Claim 18 wherein said at least one molecule other than a PAA is selected from the group consisting of functionalized siloxane, a functionalized polysiloxane, an amine, a polyamine-imine, an oxazoline, a polyoxazoline, and a functionalized polyurethane.

20. A coating of Claim 18 wherein said at least one molecule other than a PAA comprises a moiety selected from the group consisting of an epoxy, amino, hydroxyl, isocyanate, oxazoline, and a carboxyl moiety

21. A coating of Claims 18, 19 or 20 wherein said composition further comprises an agent that reduces the surface energy of the coating.

22. A coating of Claims 18, 19 or 20 wherein said composition further comprises a compound comprising fluorine.

23. A coating of Claims 18, 19 or 20 wherein said composition further comprises a PTFE.

24. A coating prepared from a coating composition of Claims 1 or 2.

25. An article of manufacture comprising a coating of Claims 18, 19 or 20.

26. An article of manufacture comprising a coating of Claims 18, 19 or 20, said article being an industrial fabric.

27. An article of manufacture comprising a coating of Claims 18, 19 or 20, wherein said article of manufacture fabric is a papermaking machine fabric.

28. An article of manufacture comprising a coating of Claims 18, 19 or 20, wherein said article of manufacture fabric is a through-air-dryer fabric.

29. An article of manufacture comprising a coating of Claims 18, 19 or 20, wherein said article of manufacture fabric is a dryer fabric.

30. An article of manufacture comprising a coating of Claims 18, 19 or 20, wherein said article of manufacture fabric is a press fabric.

31. An article of manufacture comprising a coating of Claims 18, 19 or 20, wherein said article of manufacture fabric is a press fabric, wherein the press fabric comprises nylon.

32. An article of manufacture comprising a coating of Claims 18, 19 or 20, wherein said article of manufacture fabric is a forming fabric.

33. A process of coating an article of manufacture, said process comprising the use of a composition of Claim 1.

34. A process of Claim 33 comprising the steps of
(1) coating the article with the composition;
(2) removing the water from the composition;
(3) increasing the temperature so as to volatilize the neutralizing agent;
(4) maintaining or increasing the temperature for step (3) until the PAA links to the directly linkable molecule; and
(5) maintaining or increasing the temperature for step (4) until at least some of the remaining amide-amic acid units in the PAA convert to amide-imide units.

35. A process of Claim 34 wherein in step (5) or a subsequent step all the remaining amide-amic acid units in the PAA are converted to amide-imide units.

36. A process of coating an article of manufacture, said process comprising the use of a composition of Claim 2.

37. A process of Claim 36 comprising the steps of
(1) coating the article with the composition;
(2) removing the water from the composition;
(3) increasing the temperature so as to volatilize the neutralizing agent;
(4) maintaining or increasing the temperature for step (3) until the PAA links to the crosslinker and the crosslinker links to the crosslinkable molecule; and
(5) maintaining or increasing the temperature for step (4) until any remaining amide-amic acid units in the PAA convert to amide-imide units.

38. A process of Claim 37 wherein in step (5) or a subsequent step all the remaining amide-amic acid units in the PAA are converted to amide-imide units.

39. A process of Claims 33, 34, 36 or 37 wherein the article of manufacture is an industrial fabric.

40. A process of Claims 33, 34, 36 or 37 wherein the article of manufacture is a papermaking machine fabric.

41. A process of Claims 33, 34, 36 or 37 wherein the article of manufacture is a through-air dryer fabric.

42. A process of Claims 33, 34, 36 or 37 wherein the article of manufacture is a dryer fabric.

43. A process of Claims 33, 34, 36 or 37 wherein the article of manufacture is a press fabric.

44. A process of Claims 33, 34, 36 or 37 wherein the article of manufacture is a forming fabric.

45. A process of making paper, said process comprising the use of a papermaking machine fabric, wherein said fabric was coated by a process comprising the composition of Claims 1 or 2.

46. A process of making paper, said process comprising the use of a papermaking machine fabric, wherein said fabric was coated by a process comprising the composition of Claims 1 or 2, and wherein said fabric is a through-air-dryer-fabric.

47. A process of making paper, said process comprising the use of a papermaking machine fabric, wherein said fabric comprises a coating of Claims, 18, 19, or 20.

48. A process of making paper, said process comprising the use of a through-air-dryer machine fabric, wherein said fabric comprises a coating of Claims, 18, 19, or 20.

49. A process of making paper, said process comprising the use of a through-air dryer machine fabric, said fabric comprising a coating, said coating comprising a polymer.
